# EUROPEAN PATENT APPLICATION

(11) **EP 4 707 577 A1**
(43) Date of publication of application: **11.03.2026**
(21) Application number: 25198679.0
(22) Date of filing: 28.08.2025
(51) Int. Cl.: F02M 21/02

(54) **ENGINE SYSTEM**

(30) Priority: 30.08.2024 JP 2024148398
(71) Applicant: Japan Engine Corporation, Akashi-shi, Hyogo 674-0093 (JP); KAWASAKI JUKOGYO KABUSHIKI KAISHA, Kobe-shi, Hyogo 650-8670 (JP); Yanmar Holdings Co., Ltd., Osaka-shi, Osaka 530-8311 (JP)
(72) Inventor: OKAMURA, Hideo, Hyogo, 6740093 (JP); KINOSHITA, Yoshihiko, Hyogo, 6740093 (JP); MIZUTANI, Sumio, Hyogo, 650-8670 (JP); TAKAGI, Toshihiro, Hyogo, 650-8670 (JP); HIROSE, Koichi, Osaka, 530-8311 (JP); KUBO, Takahiro, Osaka, 530-8311 (JP); HIRAIWA, Takuya, Osaka, 530-8311 (JP)
(74) Representative: Eisenführ Speiser

(57) **Abstract**

An objective is to compactly configure an inert gas supply system in an engine system including a double pipe through which hydrogen gas and inert gas flow. The engine system S includes: a hydrogen engine 1 mounted on a ship 1000; a hydrogen flow passage 41 configured to allow hydrogen gas to flow therethrough so that the hydrogen gas is supplied to the hydrogen engine 1; a generator 51 mounted on the ship 1000 and configured to generate an inert gas; a nitrogen flow passage 72 including an outer pipe 72c, 72d that surrounds at least part of the hydrogen flow passage 41 serving as an inner pipe 41a, 41b to form a double pipe 8, the nitrogen flow passage 72 being configured to discharge nitrogen gas, supplied from the generator 51, to the outside of the ship through the outer pipe 72c, 72d; and a flow rate adjusting unit 73 disposed closer to the hydrogen engine 1 than to the generator 51 on a flow path formed by the nitrogen flow passage 72 and configured to adjust a flow rate of nitrogen gas in the nitrogen flow passage 72.

## Description

### CROSS-REFERENCE TO RELATED APPLICATION

This application claims priority to Japanese Patent Application No. 2024-148398 filed on August 30, 2024, the entire disclosure of which is incorporated by reference herein.

### BACKGROUND

The present disclosure relates to an engine system including a hydrogen engine.

Japanese Unexamined Patent Publication No. 2022-1762 discloses a gas supply system for a gas engine or a dual-fuel engine, which is configured to be mountable on a ship. The gas supply system includes a double-walled gas line extending from a gas control station to cylinders of the engine. The double-walled gas line has an inner pipe through which the gaseous fuel flows and an outer pipe which at least partially surrounds the inner pipe and through which an inert gas flows.

According to Japanese Unexamined Patent Publication No. 2022-1762, the outer pipe surrounds the inner pipe at least partially and can discharge potential gas leaks with the aid of an inert gas.

Further, Japanese Patent No. 6265166 discloses a hydrogen leakage monitoring system including a double pipe as another example of the double-walled gas line. The double pipe has an inner pipe through which a mixed gas of hydrogen and nitrogen flows from the hydrogen production plant to the hydrogen station, and an outer pipe that allows nitrogen to flow from the hydrogen station to the hydrogen production plant through a space between the inner pipe and the outer pipe.

### SUMMARY

The double pipe disclosed in Patent Documents 1 and 2 requires a supply source of an inert gas such as a nitrogen tank. However, in the case of a hydrogen engine for a ship, since the space on or inside the ship is limited, it is necessary to devise a configuration that contributes to the compactness of the inert gas supply system.

The present disclosure has been made in view of the above circumstances, and an object thereof is to compactly configure an inert gas supply system in an engine system including a double pipe through which hydrogen gas and inert gas flow.

### SOLUTION TO THE PROBLEM

A first aspect of the present disclosure relates to an engine system. The engine system includes: a hydrogen engine mounted on a ship and configured to combust hydrogen gas in a combustion chamber; a first flow passage connected to the hydrogen engine and configured to allow the hydrogen gas to flow therethrough so that the hydrogen gas is supplied to the hydrogen engine; a generator mounted on the ship and configured to generate an inert gas; a second flow passage including an outer pipe that surrounds at least part of the first flow passage serving as an inner pipe to form a double pipe, the second flow passage being configured to discharge the inert gas, supplied from the generator, to the outside of the ship through the hydrogen engine; and a flow rate adjusting unit configured to adjust a flow rate of the inert gas in the second flow passage.

In general, a tank for storing an inert gas such as nitrogen is unsuitable for mounting on a ship, considering the space on the ship or inside the ship.

To address this, according to the first aspect, a generator for the inert gas is mounted on the ship instead of a tank storing the inert gas. A system configured to generate the inert gas appropriately contributes to the compactness of the inert gas supply system.

Even if a generator, such as that described in the first aspect, is used, the generator itself may become larger in size depending on the amount of inert gas to be generated. In order to realize the compactness of the inert gas system, it is desirable to set the flow rate of the inert gas to a desired value without increasing the size of the generator.

To address this, according to the first aspect, by using the flow rate adjusting unit, the flow rate of the inert gas can be appropriately set to achieve smooth discharge of the leaked hydrogen gas and reliable confinement of the leaked hydrogen gas, without changing the dimensions of the generator itself.

According to a second aspect of the present disclosure, the flow rate adjusting unit may adjust the flow rate of the inert gas to the flow rate greater than or equal to a predetermined value.

According to the second aspect, it is possible to keep the flow rate of the inert gas in the vicinity of the hydrogen engine at or above a predetermined value while reducing the supply amount of the inert gas from the generator to the second flow passage. This configuration contributes to both the compact configuration of the inert gas supply system and an appropriate measure to the leakage of hydrogen gas.

According to a third aspect of the present disclosure, the flow rate adjusting unit may include a pressure adjusting unit disposed at a selectable portion of the second flow passage, the pressure adjusting unit being configured to generate a pressure difference in the inert gas between a primary side and a secondary side of the selectable portion.

According to the third aspect, usage of the pressure adjusting unit such as a pressure reducing valve is advantageous in ensuring the flow rate of the inert gas in the vicinity of the hydrogen engine.

According to a fourth aspect of the present disclosure, the flow rate adjusting unit may be disposed closer to the hydrogen engine than to the generator on a flow path formed by the second flow passage.

According to the fourth aspect, the flow rate adjusting unit is disposed closer to the hydrogen engine than to the generator in the second flow passage. Such a configuration can more reliably adjust the flow rate of the inert gas in the vicinity of the hydrogen engine to a desired value, as compared, for example, to a configuration in which the flow rate adjusting unit is disposed in the vicinity of the generator. This enables a more appropriate measure to hydrogen gas leakage.

According to a fifth aspect of the present disclosure, the flow rate adjusting unit may be disposed at least at one of an inflow portion into the hydrogen engine or an outflow portion from the hydrogen engine in the second flow passage.

According to the fifth aspect, the flow rate adjusting unit is disposed as described in the fifth aspect, which is advantageous in ensuring the flow rate of the inert gas in the vicinity of the hydrogen engine, as compared, for example, to a configuration in which a pressure adjusting unit is disposed in the vicinity of the generator.

According to a sixth aspect of the present disclosure, the flow rate adjusting unit may include a throttle disposed at a downstream end of the second flow passage, the throttle being configured to narrow a flow passage cross-sectional area at the downstream end.

According to the sixth aspect, the flow velocity of the inert gas discharged from the second flow passage can be increased by using the throttle. This is advantageous in adjusting the flow rate of the inert gas and enables a more appropriate measure to hydrogen gas leakage.

According to a seventh aspect of the present disclosure, the flow rate adjusting unit may include a closing part disposed at a discharge outlet located at a downstream end of the second flow passage, the closing part being configured to close the discharge outlet.

According to the seventh aspect, the flow rate of the inert gas is set to zero instead of keeping it at or above a predetermined value. This makes it possible to confine the hydrogen gas leaked from the first flow passage serving as the inner pipe, and enables a more appropriate measure to hydrogen gas leakage.

For example, if the generator malfunctions, the discharge outlet is closed by the closing part so that the inert gas and the hydrogen gas leaked into the inert gas are not discharged. Accordingly, even when the supply of the inert gas from the generator is stopped, it is possible to respond to the leakage of hydrogen gas and continue the operation of the hydrogen engine using hydrogen gas as well.

According to an eighth aspect of the present disclosure, the inert gas may be nitrogen gas, and the engine system may further include: a gas characteristic sensor disposed at a downstream end of the second flow passage and configured to detect at least one of an oxygen concentration or a nitrogen concentration at the downstream end; and a controller configured to determine whether to operate the hydrogen engine using the hydrogen gas, based on a detection signal from the gas characteristic sensor, a lower limit value of the oxygen concentration that is predetermined in a hydrogen-oxygen-nitrogen ternary system and at which explosiveness of the hydrogen gas is ensured is defined as a threshold oxygen concentration, and an upper limit value of the nitrogen concentration that is predetermined in the hydrogen-oxygen-nitrogen ternary system and at which explosiveness of the hydrogen gas is ensured is defined as a threshold nitrogen concentration, the controller may permit operation of the hydrogen engine using the hydrogen gas if either a first condition, which is met when a detected value of the oxygen concentration is less than or equal to the threshold oxygen concentration, or a second condition, which is met when a detected value of the nitrogen concentration is greater than or equal to the threshold nitrogen concentration, is met, and the controller may make a determination of at least one of the first condition or the second condition while adjusting a flow rate of the nitrogen gas by the flow rate adjusting unit so as to increase a flow velocity of the nitrogen gas.

According to the eighth aspect, the controller determines whether to permit the operation of the hydrogen engine based on the threshold oxygen concentration or the threshold nitrogen concentration defined based on the explosiveness in the hydrogen-oxygen-nitrogen ternary system. This determination is made with reference to the oxygen concentration or the nitrogen concentration, and does not require detection of the hydrogen concentration.

In this way, by using the threshold oxygen concentration or the threshold nitrogen concentration, it can be determined that an explosion due to the leaked hydrogen gas cannot occur even if the nitrogen concentration in the second flow passage does not reach 100% and a small amount of oxygen is present therein. The amount of nitrogen gas generated in the generator can be set appropriately without excess or deficiency, making it possible to achieve compactness of the generator and, consequently, the nitrogen gas supply system.

Further, according to the eighth aspect, the determination can be made based on the threshold oxygen concentration or the threshold nitrogen concentration, while reducing the amount of the nitrogen gas supplied from the generator to the second flow passage by increasing the flow velocity of the nitrogen gas using the flow rate adjusting unit. This can reduce the supply amount (pressure) of the nitrogen gas to the second flow passage and reduce leakage of the nitrogen gas in the event of breakage of the outer pipe.

Specifically, the flow rate adjusting unit such as the throttle can increase the flow velocity of the nitrogen gas at the time of discharge to the outside of the ship. This can enhance the diffusivity around the discharge outlet to the outside of the ship in the event of leakage of hydrogen gas as well. Since the diffusivity is increased by the flow rate adjusting unit, the nitrogen flow rate can be reduced accordingly.

In addition, since the diffusivity after discharge from the ship is enhanced, the hydrogen concentration is more likely to become diluted. Accordingly, even if the leaked hydrogen is mixed with the atmosphere or air (oxygen concentration: 21%), the risk associated with the ignition or combustion of hydrogen can be reduced.

According to a ninth aspect of the present disclosure, the engine system may further include: a booster configured to store the nitrogen gas at a pressure higher than that in the generator; and a leakage sensor configured to detect gas leakage from the first flow passage, wherein before starting operation of the hydrogen engine using the hydrogen gas, the controller may supply the nitrogen gas into the first flow passage through the booster, determine whether a third condition indicating that no gas leakage from the first flow passage occurs is met, based on a detection signal from the leakage sensor, if the third condition is met, supply the nitrogen gas into the second flow passage through the generator instead of the booster, after the start of the supply of the nitrogen gas through the generator, adjust the flow rate of the nitrogen gas through the flow rate adjusting unit and determine whether the first condition or the second condition is met, and start operation of the hydrogen engine if the first condition or the second condition is met.

According to the ninth aspect, before starting the operation by combustion of the hydrogen gas, the controller supplies nitrogen gas at a relatively high pressure into the first flow passage, makes a determination of hydrogen gas leakage based on the leakage sensor, then supplies nitrogen gas at a relatively low pressure into the second flow passage, and determines whether to operate the hydrogen engine based on the threshold oxygen concentration or the threshold nitrogen concentration.

Further, according to the configuration of the ninth aspect, the nitrogen concentration in the first flow passage can be rapidly increased by the nitrogen gas at a relatively high pressure. A rapid increase in the nitrogen concentration in the first flow passage enables a prompt determination based on the leakage sensor. Since the determination based on the leakage sensor can be made promptly, the subsequent processing can be started promptly. This makes it possible to promptly shift from the supply of nitrogen gas to the first flow passage using the booster to the supply of nitrogen gas to the second flow passage using the generator. This is advantageous in promptly starting the determination whether to operate the hydrogen engine, based on the first condition or the second condition. Using the booster and the generator according to their intended purposes is advantageous in determining as promptly as possible whether to operate the hydrogen engine using hydrogen gas.

According to a tenth aspect of the present disclosure, the engine system may further include a leakage sensor configured to detect gas leakage from the first flow passage, wherein during operation of the hydrogen engine using the hydrogen gas, the controller may continuously make an adjustment of the flow rate of the nitrogen gas through the flow rate adjusting unit, a determination whether the first condition or the second condition is met, and a determination, based on a detection signal from the leakage sensor, whether a third condition indicating that no gas leakage from the first flow passage occurs is met, and decrease a supply amount of the hydrogen gas into the combustion chamber if any one of the first condition, the second condition, or the third condition is not met.

According to the tenth aspect, during the operation of the hydrogen engine using hydrogen gas, the controller continuously makes the determination as to the explosiveness of hydrogen gas based on the threshold oxygen concentration or the threshold nitrogen concentration (a determination to confirm that nitrogen gas is sufficiently supplied into the second flow passage) and the monitoring of hydrogen gas leakage.

With the configuration of the tenth aspect, the amount of nitrogen gas supplied to the second flow passage is reduced, as described above. It is thus possible to achieve both compactness of the nitrogen gas supply system and higher accuracy in detecting the oxygen concentration or the hydrogen concentration in the second flow passage, and consequently higher accuracy in determining whether to operate the hydrogen engine.

According to an eleventh aspect of the present disclosure, the hydrogen engine may combust a different type of fuel that is different from the hydrogen gas, together with the hydrogen gas in the combustion chamber, and the controller may increase a ratio of a calorific value of the different type of fuel to a calorific value of the hydrogen gas in the combustion chamber if any one of the first condition, the second condition, or the third condition is not met.

According to the eleventh aspect, even when any of the first condition, the second condition, or the third condition is not met, the operation of the hydrogen engine can be continued using the different type of fuel.

It has been known to shut off the supply of hydrogen gas to a hydrogen engine in the event of hydrogen gas leakage. When the supply of hydrogen gas is shut off, the hydrogen engine stops its operation.

In fact, as for the hydrogen engine used in a vehicle, it is enough to park the vehicle on the shoulder of a road or the like in stopping the engine. However, as for the hydrogen engine used in a ship, if it is completely stopped, the ship may fall into a so-called "dead ship condition." The dead ship condition is undesirable because it may cause various troubles such as a drift of the ship.

In contrast, by continuing the operation of the hydrogen engine using the different type of fuel as in the eleventh aspect, it is possible to cope with the leakage of hydrogen gas appropriately and to keep the ship from falling into a dead ship condition even in the event of hydrogen gas leakage.

### ADVANTAGES OF THE INVENTION

As described above, according to the present disclosure, in an engine system including a double pipe through which hydrogen gas and inert gas flow, the supply system of the inert gas can be compactly configured.

### BRIEF DESCRIPTION OF THE DRAWINGS

FIG. 1 is a diagram illustrating a ship on which an engine system is mounted.
FIG. 2 is a side view illustrating a partial configuration of a hydrogen engine.
FIG. 3 is a cross-sectional view schematically illustrating an upper structure of the hydrogen engine.
FIG. 4 is a diagram illustrating a flow path structure of the engine system.
FIG. 5 is a cross-sectional view taken along line A-A and a cross-sectional view taken along line B-B in FIG. 4.
FIG. 6 is a block diagram illustrating a configuration of a controller.
FIG. 7 is a flowchart illustrating a process executed before the start of operation of the engine using hydrogen gas.
FIG. 8 is a flowchart illustrating a process executed during operation of the engine using hydrogen gas.
FIG. 9 is a diagram for explaining whether the first condition and the second condition are met.

### DETAILED DESCRIPTION

Embodiments of the present disclosure will be described below with reference to the drawings. The following description is provided as an example.

### <Overall Configuration>

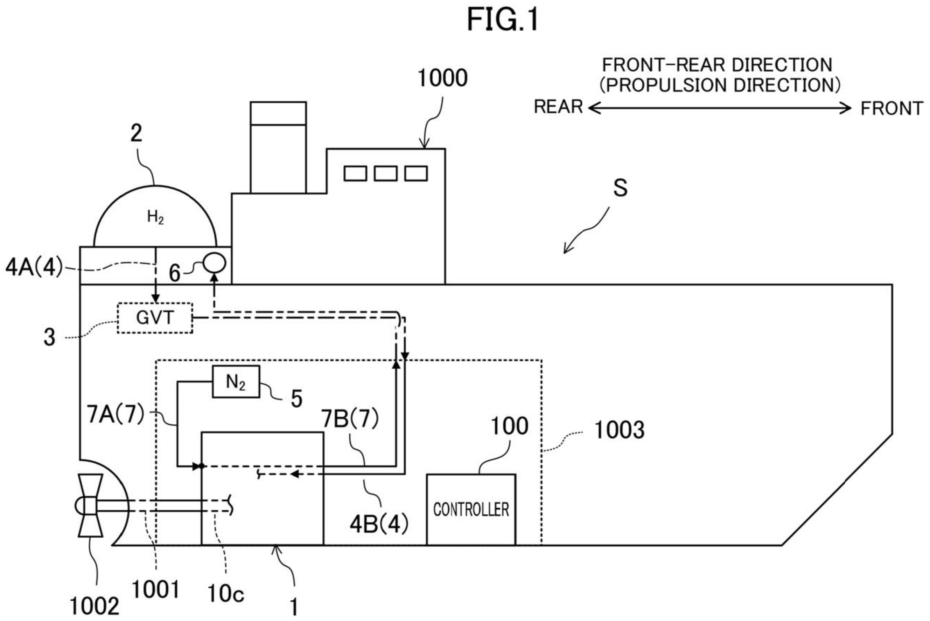

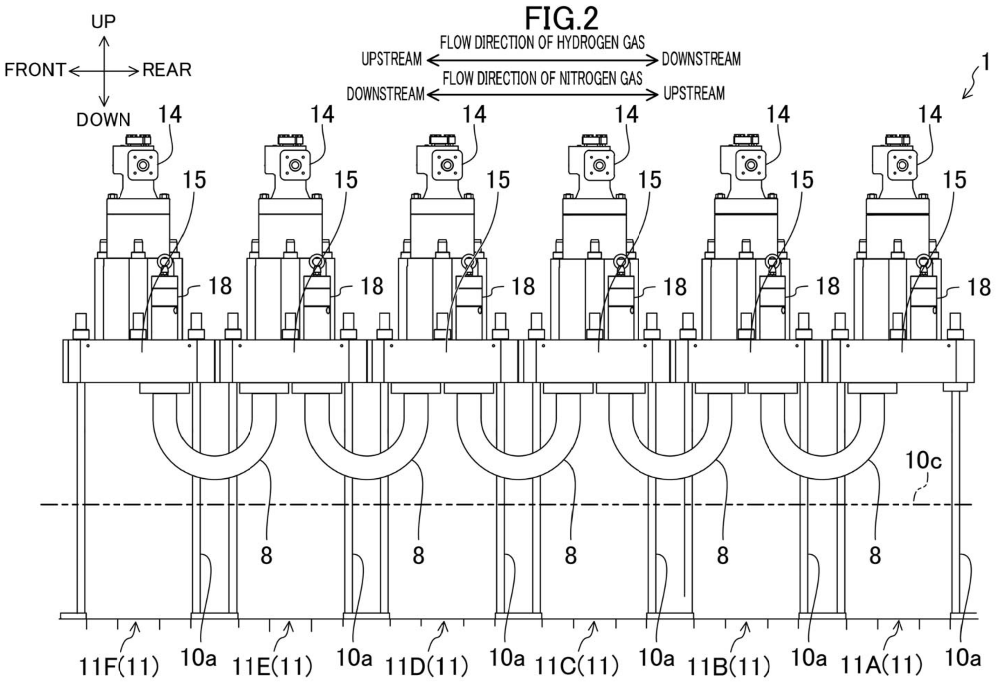

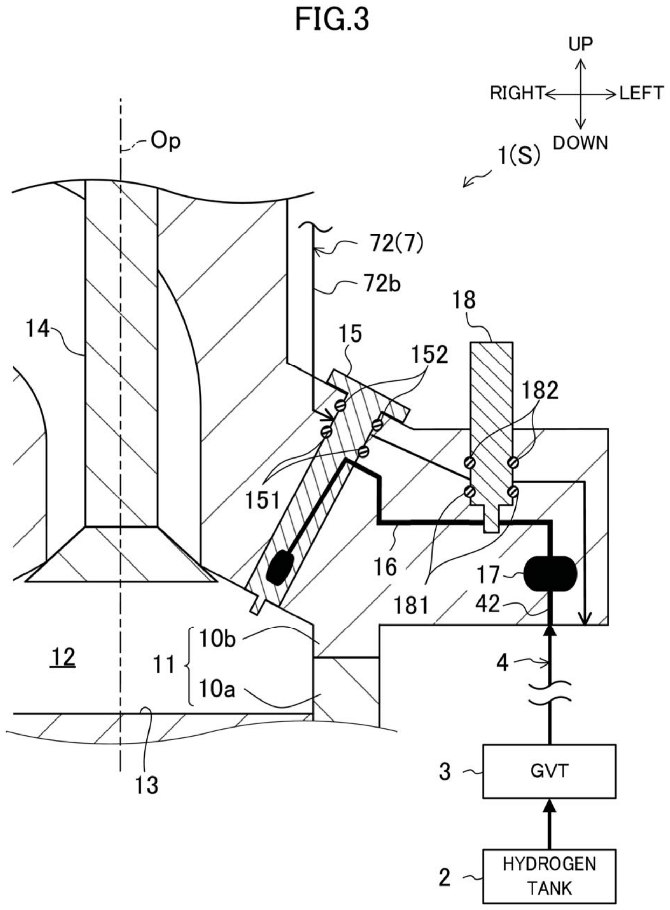

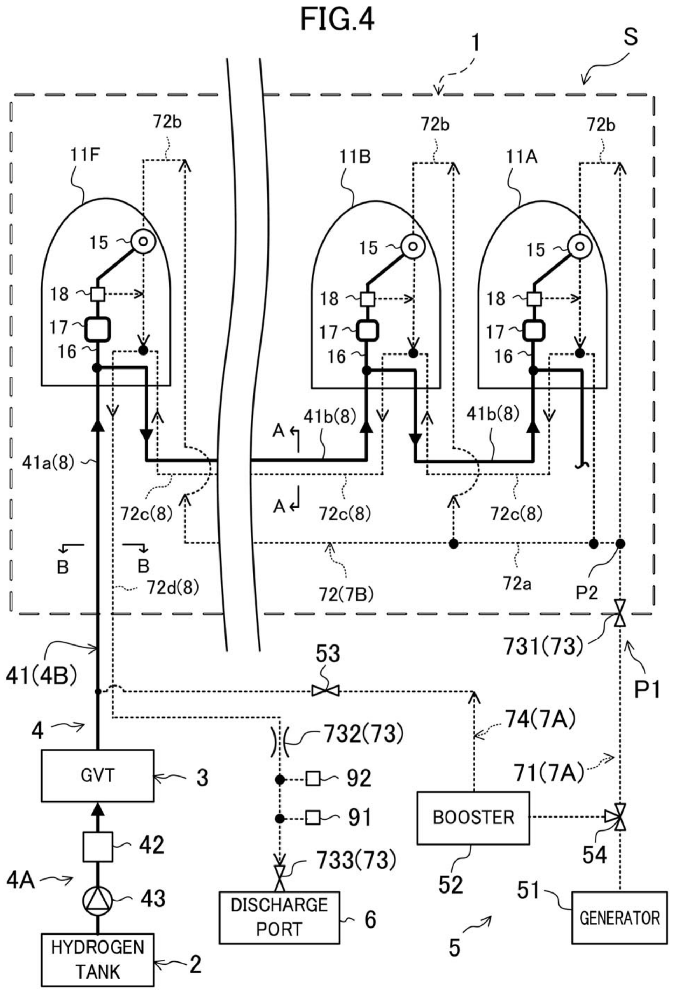

FIG. 1 is a diagram illustrating a ship 1000 on which an engine system S is mounted. FIG. 2 is a side view illustrating a partial configuration of the hydrogen engine (hereinafter referred to as "engine") 1. FIG. 3 is a cross-sectional view schematically illustrating an upper structure of the engine 1. FIG. 4 is a diagram illustrating a flow path structure of the engine system S. In FIG. 4, the arrows shown in solid lines indicate the flow of hydrogen gas. In the same drawing, the arrows shown in broken lines indicate the flow of nitrogen gas as an inert gas. The terms "upstream" and "downstream" used below are defined based on the flow direction of the corresponding gas.

As shown in FIG. 1, the engine system S includes an engine 1 used in a ship, a hydrogen tank 2, a gas valve train (GVT) 3 interposed between the hydrogen tank 2 and the engine 1, a hydrogen gas system 4 connecting the GVT 3 to the engine 1, an inert gas source 5, a discharge outlet 6 that is open to the outside of an engine room 1003 and the outside of the ship and discharges inert gas, an inert gas system 7 connecting the inert gas source 5 and the discharge outlet 6 to the engine 1, and a controller 100 that controls the engine system S.

The hydrogen tank 2, the GVT 3, and the hydrogen gas system 4 form a hydrogen gas supply system. The inert gas source 5 and the inert gas system 7 form an inert gas supply system.

The engine 1, the hydrogen tank 2, the GVT 3, the hydrogen gas system 4, the inert gas source 5, the inert gas system 7, and the controller 100 are all mounted on the same ship 1000. The ship 1000 is a large ship such as a tanker, a container ship, or a car carrier.

It should be noted that the engine 1 and the controller 100 are regarded as separate elements merely for the sake of convenience. The controller 100 may be regarded as an element of the engine 1. The same applies to other elements such as the hydrogen tank 2, the GVT 3, the hydrogen gas system 4, the inert gas source 5, and the inert gas system 7. Further, a part of each of the elements may be regarded as an element of the engine 1.

The engine 1 includes a plurality of cylinders 11 that are connected through a common output shaft (crankshaft 10c). As shown in FIG. 3, each cylinder 11 defines a combustion chamber 12 for combusting hydrogen gas. A propeller shaft 1001 and a propeller 1002 for propelling the ship 1000 are coupled to the crankshaft 10c.

The engine 1 is a hydrogen engine that combusts hydrogen gas in the combustion chamber 12 of each cylinder 11. The engine 1 can also be referred to as a gas engine that uses hydrogen gas as its fuel gas. It is not essential that there be a plurality of cylinders 11.

The engine 1 may combust hydrogen gas alone or may combust a different type of fuel that is different from hydrogen gas in combination with hydrogen gas in the combustion chamber 12 (mixed combustion). The different type of fuel may specifically be fuel oil, and more specifically heavy oil. In the present embodiment, heavy oil is used as the different type of fuel.

As an example, the engine 1 according to the present embodiment is an engine that can be switched to any one of a first mode in which hydrogen gas is combusted alone, a second mode in which hydrogen gas and a different type of fuel are combusted in combination (for example, a mode in which hydrogen gas and heavy oil are combusted in a mixed manner), or a third mode in which a different type of fuel is combusted alone. The engine 1 according to the present embodiment is configured to execute a process of setting any one of the first mode, the second mode, or the third mode based on a control signal from the controller 100.

Specifically, the engine 1 according to the present embodiment is configured as a uniflow scavenging type two-stroke single-cycle engine, and is used as a main engine for propelling the ship 1000 by being controlled in response to a control signal from the controller 100. The engine 1 is disposed in the engine room 1003 defined inside the ship 1000.

The hydrogen tank 2 stores hydrogen gas. The hydrogen tank 2 is disposed outside the engine room 1003, for example, on the ship 1000, for example, on an open deck. The hydrogen tank 2 stores liquefied hydrogen, supplied from the outside of the ship at the time of port call or the like, in a liquefied state at low pressure. That is, the hydrogen tank 2 is configured to store liquefied hydrogen (LH₂).

The GVT 3 connects the hydrogen tank 2 to the engine 1 through the hydrogen gas system 4. The GVT 3 is disposed inside or outside the engine room 1003. As shown in FIG. 1, the GVT 3 according to the present embodiment is disposed in a room of the ship 1000 formed outside the engine room 1003. The GVT 3 includes piping for allowing hydrogen gas to flow and a plurality of control valves that open and close the piping. The GVT 3 is electrically connected to the controller 100. The GVT 3 opens and closes each control valve based on a control signal received from the controller 100.

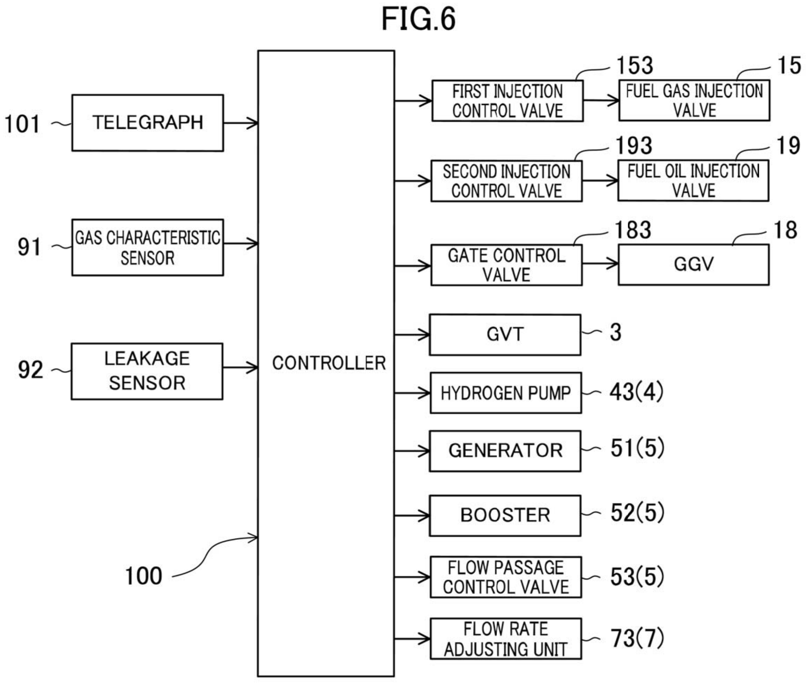

The hydrogen gas system 4 is connected to the engine 1. The hydrogen gas system 4 allows the hydrogen gas to flow to the engine 1. The hydrogen gas system 4 includes a first hydrogen gas system 4A that connects the hydrogen tank 2 and the GVT 3, a second hydrogen gas system 4B that connects the GVT 3 to each cylinder 11 of the engine 1, and a hydrogen pump 43 shown in FIGS. 4 and 6.

As described later, the hydrogen gas system 4 includes piping for allowing the hydrogen gas to flow, such as a hydrogen flow passage 41 as a "first flow passage." As shown in the second hydrogen flow pipe 41b of FIG. 4, the pipes forming the hydrogen gas system 4 include pipes passing through the inside of the engine 1, such as pipe lines connecting the cylinders 11. The hydrogen gas system 4 is disposed inside and outside the engine room 1003.

The inert gas source 5 has a generator 51 that generates an inert gas. In the present embodiment, the inert gas includes a gas not containing oxygen, and more specifically includes a nitrogen gas. In the present embodiment, nitrogen gas is used as the inert gas. The inert gas source 5 is disposed inside the ship 1000, for example, in the engine room 1003.

The discharge outlet 6 discharges the inert gas. The discharge outlet 6 discharges the inert gas (hereinafter referred to as "nitrogen gas" or "nitrogen") supplied from the inert gas source 5 to the outside of the ship. The discharge outlet 6, as described above, is disposed outside the engine room 1003 and allows the space outside the engine room 1003 to communicate with the space outside the ship. The discharge outlet 6 according to the present embodiment is open from the outside of the engine room 1003 toward the outside of the ship, as shown, for example, in FIG. 1.

The inert gas system 7 is connected to each of the inert gas source 5 and the discharge outlet 6. The inert gas system 7 includes a first nitrogen gas system 7A that connects the inert gas source 5 and the engine 1, and a second nitrogen gas system 7B that connects the engine 1 and the discharge outlet 6.

As described later, the inert gas system 7 includes piping for allowing nitrogen gas to flow, such as a nitrogen flow passage 72 as a "second flow passage." As shown in the first connection pipe 72c of FIG. 4, the pipes forming the inert gas system 7 include pipes passing through the inside of the engine 1, such as pipe lines connecting the cylinders 11. The inert gas system 7 is disposed inside and outside the engine room 1003.

### <Engine 1>

The engine 1 according to the present embodiment has multiple (six in the present embodiment) cylinders 11 as described above. The multiple cylinders 11 are arranged in the propulsion direction of the ship 1000.

Hereinafter, the direction in which the cylinders 11 are arranged is referred to as a front-rear direction, and the direction orthogonal to both the front-rear direction and a central axis (central axis of the piston 13 inserted into each cylinder 11) Op shown in FIG. 3 is referred to as a left-right direction.

The terms "fore" and "aft" as used herein correspond to the bow direction and the stern direction of the ship 1000, respectively. The front-rear direction can be referred to as a "first direction." The left-right direction can be referred to as a "second direction."

Hereinafter, the six cylinders 11 may be referred to as a "first cylinder 11A," a "second cylinder 11B," a "third cylinder 11C," a "fourth cylinder 11D," a "fifth cylinder 11E," and a "sixth cylinder 11F" in order from the rear side of FIG. 2 to distinguish them from one another.

The engine 1 according to the present embodiment is a two-stroke diesel engine. The engine 1 is configured as a so-called cross head internal combustion engine to achieve its long stroke.

To be specific, the engine 1 includes a cylinder liner 10a and a cylinder cover 10b. Each cylinder 11 is constituted by a cylinder liner 10a and a cylinder cover 10b. The engine 1 also includes a piston 13 disposed in the cylinder 11, and the piston 13 reciprocates within the cylinder 11.

The cylinder liner 10a constitutes an inner cylinder in which the piston 13 reciprocates. The piston 13 is disposed inside the cylinder liner 10a. The cylinder liner 10a is supported by a cylinder jacket that houses elements connected to the piston 13, such as a piston rod, a cross head, and a connection rod.

The cylinder cover 10b is fixed to an upper end of the cylinder liner 10a. The cylinder cover 10b serves as a lid of the cylinder 11 by closing the upper end of the cylinder liner 10a.

As shown in FIG. 3, the engine 1 includes an exhaust valve 14. The exhaust valve 14 is supported by the cylinder cover 10b. The exhaust valve 14 defines the combustion chamber 12 together with an inner wall surface of the cylinder 11 and a top surface of the piston 13. The exhaust valve 14 opens and closes an exhaust port communicating from the inside to the outside of the combustion chamber 12. The exhaust port discharges exhaust gas generated by combustion.

The engine 1 includes one or more (one in the illustrated example) fuel gas injection valves 15. The one or more fuel gas injection valves 15 are valves for supplying hydrogen gas into the combustion chamber 12. The one or more fuel gas injection valves 15 are operated in accordance with the hydraulic pressure of the hydraulic oil, thereby injecting hydrogen gas into the cylinder 11. The hydraulic pressure of the hydraulic oil is adjusted by opening and closing the electromagnetic valve (e.g. solenoid valve). The opening and closing of the electromagnetic valve is controlled according to a control signal from the controller 100 electrically connected to the electromagnetic valve.

In the present embodiment, two fuel gas injection valves 15 are provided for each cylinder 11, and each is provided in an orientation facing the inside of the combustion chamber 12. Each of the fuel gas injection valves 15 injects hydrogen gas from an injection port located at a tip end thereof.

As shown in FIG. 3, the fuel gas injection valve 15 is connected to the hydrogen gas system 4, so that hydrogen gas is supplied from the hydrogen gas system 4. Specifically, as shown in FIG. 4, the second hydrogen gas system 4B is branched into a plurality of hydrogen gas inflow passages 16 for each cylinder 11. The hydrogen gas system 4 supplies hydrogen gas to the fuel gas injection valves 15 of the cylinders 11 through the hydrogen gas inflow passages 16. The hydrogen gas inflow passage 16 is further branched by the number of the fuel gas injection valves 15 in each cylinder 11.

In the illustrated example, the hydrogen gas inflow passage 16 is formed in the cylinder cover 10b, but this is not an essential configuration. The hydrogen gas inflow passage 16 may be formed by separate piping that is separate from the cylinder liner 10a and the cylinder cover 10b.

The engine 1 also includes one or more fuel oil injection valves 19, as shown only in FIG. 6, which will be described later. The fuel oil injection valve 19 is a valve for supplying heavy oil into the combustion chamber 12. The one or more fuel oil injection valves 19 are operated in accordance with the hydraulic pressure of the hydraulic oil, thereby injecting heavy oil into the cylinder 11. Specifically, in each of the fuel oil injection valves 19, the fuel oil is pressure-fed by actuating a fuel pump for the fuel oil with the hydraulic pressure of the hydraulic oil. The hydraulic pressure of the hydraulic oil is adjusted by controlling an electromagnetic valve connected to the fuel pump. The electromagnetic valve is controlled according to a control signal from the controller 100 electrically connected to the electromagnetic valve. The fuel oil injection valve 19 is not an essential element.

The engine 1 includes a gas accumulator 17 and a gas gate valve (GGV) 18. The gas accumulator 17 and the GGV 18 are disposed on the flow path of the hydrogen gas inflow passage 16.

Specifically, the gas accumulator 17 and the GGV 18 are disposed along the hydrogen gas inflow passage 16. More specifically, the gas accumulator 17 and the GGV 18 are disposed in the order of the gas accumulator 17 and the GGV 18 from the upstream side along the flow direction of the hydrogen gas. These elements are disposed for each cylinder 11, similarly to the hydrogen gas inflow passage 16.

Specifically, the gas accumulator 17 is connected to the GVT 3 through the hydrogen gas system 4 and the hydrogen gas inflow passage 16. The gas accumulator 17 accumulates the hydrogen gas to be supplied to each fuel gas injection valve 15.

In the illustrated example, the gas accumulator 17 is formed in the cylinder cover 10b, but this is not an essential configuration. The gas accumulator 17 may be formed by a tank-shaped member that is separate from the cylinder liner 10a and the cylinder cover 10b.

The GGV 18 opens and closes in accordance with the hydraulic pressure of the hydraulic oil, thereby blocking the fluid connection between the gas accumulator 17 and the fuel gas injection valves 15. For example, when the GGV 18 is fully closed, the supply of hydrogen gas to the fuel gas injection valve 15 is stopped. The hydraulic pressure of the hydraulic oil is adjusted by opening and closing the electromagnetic valve. The opening and closing of the electromagnetic valve is controlled according to a control signal from the controller 100 electrically connected to the electromagnetic valve.

In the illustrated example, the GGV 18 is inserted into the cylinder cover 10b, but this is not an essential configuration. The GGV 18 may be configured by a member that is inserted into a member separate from the cylinder liner 10a and the cylinder cover 10b.

As shown in FIG. 3, the fuel gas injection valve 15 and the GGV 18 each have a double seal structure with two seal rings.

The fuel gas injection valve 15 is sealed by a first seal ring 151 and a second seal ring 152 arranged in the axial direction of the fuel gas injection valve 15. The first and second seal rings 151 and 152 seal between the outer peripheral surface of the fuel gas injection valve 15 and the inner peripheral surface of the insertion hole in the cylinder cover 10b into which hole the fuel gas injection valve 15 is inserted.

The GGV 18 is sealed by a third seal ring 181 and a fourth seal ring 182 arranged in the axial direction of the GGV 18. The third and fourth seal rings 181 and 182 seal between the outer peripheral surface of the GGV 18 and the inner peripheral surface of the insertion hole in the cylinder cover 10b into which hole the GGV 18 is inserted.

### <Hydrogen Gas System 4>

The hydrogen gas system 4 will be described below with reference mainly to FIG. 4. FIG. 4 corresponds to a diagram in which the third cylinder 11C, the fourth cylinder 11D, and the fifth cylinder 11E are omitted from the six cylinders 11.

As described above, the hydrogen gas system 4 includes the first hydrogen gas system 4A, a vaporizer 42, the hydrogen pump 43, and the second hydrogen gas system 4B. The first hydrogen gas system 4A includes one or more flow paths. The one or more flow paths connect the hydrogen tank 2 and the GVT 3, and allow hydrogen gas to flow from the hydrogen tank 2 toward the GVT 3.

The vaporizer 42 vaporizes the liquefied hydrogen stored in the hydrogen tank 2. The vaporizer 42 is disposed along the path extending from the hydrogen tank 2 to the GVT 3 through the first hydrogen gas system 4A. The vaporizer 42 is, for example, a heat exchanger that performs heat exchange between the heat medium supplied to the vaporizer 42 and the liquefied hydrogen. It is not essential that the vaporizer 42 be a heat exchanger. The vaporizer 42 may be, for example, an electric heater.

The hydrogen pump 43 increases the pressure of the liquefied hydrogen so that the liquefied hydrogen after vaporization reaches an injection pressure (for example, 15 MPa to 30 MPa in absolute pressure) to the engine 1. The hydrogen pump 43 can also be referred to as a booster pump. The hydrogen pump 43 as a booster pump is disposed along the path extending from the hydrogen tank 2 to the vaporizer 42.

The hydrogen pump 43 has an actuator for changing its discharge flow rate. The actuator is, for example, a hydraulic motor that drives a piston that pushes out liquefied hydrogen. The controller 100 is electrically connected to a control valve (not shown in FIG. 6) for controlling the flow rate of the hydraulic oil supplied to the hydraulic motor. The controller 100 actuates the hydrogen pump 43 through the control valve and controls its discharge flow rate.

The second hydrogen gas system 4B includes a hydrogen flow passage 41 including one or more flow paths. The hydrogen flow passage 41 connects the GVT 3 and the engine 1 and is configured to allow the hydrogen gas to flow therethrough so that the hydrogen gas is supplied from the GVT 3 to the engine 1. The hydrogen flow passage 41 is an example of the "first flow passage" in the present embodiment.

Specifically, the hydrogen flow passage 41 according to the present embodiment includes a first hydrogen flow pipe 41a and a second hydrogen flow pipe 41b in this order from the upstream side in the flow direction of the hydrogen gas. All or part of the hydrogen flow passage 41 may have flexibility or may have rigidity.

The first hydrogen flow pipe 41a is a tubular member that connects the GVT 3 and the cylinder 11, among the multiple cylinders 11, which is closer to the GVT 3 than the other cylinders 11 in the flow direction of the hydrogen gas. In FIG. 4, the first hydrogen flow pipe 41a is connected to the sixth cylinder 11F. The cylinder 11 to which the first hydrogen flow pipe 41a is connected can be referred to as a cylinder 11 that is farther from the discharge outlet 6 than the other cylinders 11 when viewed along the flow path of the hydrogen gas.

The second hydrogen flow pipe 41b is a tubular member that connects two cylinders 11 adjacent to each other in the flow direction of the hydrogen gas among the plurality of cylinders 11. In FIG. 4, two second hydrogen flow pipes 41b are shown in order from the upstream side in the flow direction of the hydrogen gas: the second hydrogen flow pipe 41b that connects the third cylinder 11C and the second cylinder 11B; and the second hydrogen flow pipe 41b that connects the second cylinder 11B and the first cylinder 11A. Although omitted in FIG. 4, the third cylinder 11C is connected to the upstream side of the second cylinder 11B in the flow direction of the hydrogen gas as shown in FIG. 2.

In the case of the illustrated example, the hydrogen gas supplied from the hydrogen tank 2 through GVT 3 reaches the sixth cylinder 11F through the first hydrogen flow pipe 41a. The hydrogen flow passage 41 branches inside or outside the sixth cylinder 11F.

One of the branches from the first hydrogen flow pipe 41a serves as the hydrogen gas inflow passage 16 extending from the branch portion and leads to the gas accumulator 17 of the sixth cylinder 11F. The hydrogen gas that has reached the gas accumulator 17 via the hydrogen gas inflow passage 16 is guided to the fuel gas injection valve 15 of the sixth cylinder 11F through the GGV 18, as described above.

The other branch of the first hydrogen flow pipe 41a serves as the second hydrogen flow pipe 41b extending from the branch portion and connects the sixth cylinder 11F to the fifth cylinder 11E. The hydrogen gas supplied to the sixth cylinder 11F, excluding the hydrogen gas that has reached the gas accumulator 17 of the same cylinder 11F, is guided to the fifth cylinder 11E through the second hydrogen flow pipe 41b.

In the illustrated example, the second hydrogen flow pipe 41b, which connects the third cylinder 11C and the second cylinder 11B and guides hydrogen gas from the third cylinder 11C to the second cylinder 11B, branches inside or outside the second cylinder 11B, similarly to the first hydrogen flow pipe 41a.

One of the branches from the second hydrogen flow pipe 41b serves as the hydrogen gas inflow passage 16 extending from the branch portion and leads to the gas accumulator 17 of the second cylinder 11B. The hydrogen gas that has reached the gas accumulator 17 via the hydrogen gas inflow passage 16 is guided to the fuel gas injection valve 15 of the second cylinder 11B through the GGV 18, as described above.

The other branch from the second hydrogen flow pipe 41b serves as another second hydrogen flow pipe 41b extending from the branch portion and connects the second cylinder 11B to the first cylinder 11A. The hydrogen gas supplied to the second cylinder 11B, excluding the hydrogen gas that has reached the gas accumulator 17 of the same cylinder 11B, is guided to the first cylinder 11A through the second hydrogen flow pipe 41b that connects the second cylinder 11B and the first cylinder 11A.

Further, the second hydrogen flow pipe 41b which connects the second cylinder 11B and the first cylinder 11A and guides the hydrogen gas from the second cylinder 11B to the first cylinder 11A, branches inside or outside the first cylinder 11A. The hydrogen gas inflow passage 16 extending from the branch portion leads to the gas accumulator 17 of the first cylinder 11A. The hydrogen gas that has reached the gas accumulator 17 via the hydrogen gas inflow passage 16 is guided to the fuel gas injection valve 15 of the first cylinder 11A through GGV 18.

Therefore, the hydrogen gas supplied from the GVT 3 flows through each cylinder 11 in the following order from the front side in the front-rear direction: the sixth cylinder 11F, the fifth cylinder 11E, the fourth cylinder 11D, the third cylinder 11C, the second cylinder 11B, and the first cylinder 11A.

### <Inert Gas Source 5>

As shown in FIG. 4, the inert gas source 5 includes a booster 52, a flow passage control valve 53, and a second flow passage control valve 54 in addition to the generator 51 described above.

The generator 51 generates nitrogen gas and temporarily stores the generated nitrogen gas in a state of being pressurized to a predetermined first pressure. The first pressure is, for example, a positive pressure exceeding the atmospheric pressure. Specifically, the first pressure is 0.05 MPa or more and 0.8 MPa or less, and more specifically, may be 0.05 MPa or more and 0.3 MPa or less. The first pressure here is a gauge pressure measured with reference to the atmospheric pressure. By setting the first pressure within the latter range, it is possible to reduce the likelihood of leakage of nitrogen gas to the engine room 1003 due to damage of the outer pipe and to reduce the consumption of nitrogen gas.

The generator 51 is connected to the generator-side flow passage 71 of the inert gas system 7. As described later, the generator-side flow passage 71 is connected to the engine 1. The nitrogen gas generated by the generator 51 flows through the generator-side flow passage 71 and enters the engine 1.

The booster 52 stores the nitrogen gas generated by the generator 51, at a pressure higher than that in the generator 51. The booster 52 supplies the nitrogen gas at a pressure increased to a predetermined second pressure, for example. The second pressure is, for example, a positive pressure higher than the first pressure. Specifically, the second pressure is 10 MPa or more and 50 MPa or less, and more specifically, may be 20 MPa or more and 40 MPa or less. The second pressure is a gauge pressure, like the first pressure.

The booster 52 is electrically connected to the controller 100, for example, and operates in response to a control signal from the controller 100.

The booster 52 is connected to the hydrogen flow passage 41, which serves as the first flow passage, via a nitrogen branch passage 74. The flow passage control valve 53 is disposed along the nitrogen branch passage 74.

The flow passage control valve 53 is electrically connected to the controller 100, for example, and operates in response to a control signal from the controller 100. Nitrogen gas can be supplied from the generator 51 to the hydrogen flow passage 41 by opening and closing the flow passage control valve 53.

The second flow passage control valve 54 is electrically connected to the controller 100, for example, and operates in response to a control signal from the controller 100. Nitrogen gas can be supplied from the generator 51 to the booster 52 by opening and closing the second flow passage control valve 54. The second flow passage control valve 54 is, for example, a three-way valve.

### <Inert Gas System 7>

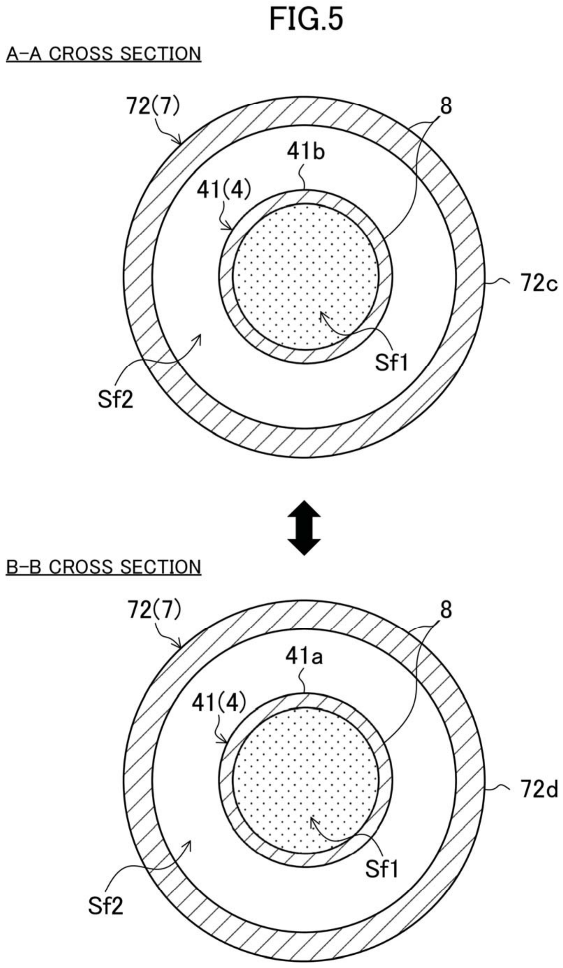

FIG. 5 is a cross-sectional view taken along line A-A or B-B in FIG. 4. As described above, the inert gas system 7 includes the first nitrogen gas system 7A and the second nitrogen gas system 7B. The first nitrogen gas system 7A includes the generator-side flow passage 71 and the nitrogen branch passage 74 described above.

The second nitrogen gas system 7B includes the nitrogen flow passage 72 and one or more flow rate adjusting units 73. The nitrogen flow passage 72 is continuous from the generator-side flow passage 71 and is connected to the discharge outlet 6.

In the present embodiment, the nitrogen gas in each flow path is set to a positive pressure equal to or greater than the atmospheric pressure, as described above. The nitrogen gas in each flow path may be set to a negative pressure lower than the atmospheric pressure. In such a case, the engine system S would include a discharge fan located near the discharge outlet 6. In this case, the discharge fan operates in response to a control signal from the controller 100, and draws nitrogen gas from the nitrogen flow passage 72 toward the discharge outlet 6.

### - Nitrogen Flow Passage 72 -

The nitrogen flow passage 72 discharges the nitrogen gas supplied from the generator-side flow passage 71 to the outside of the ship via the engine 1. The nitrogen flow passage 72 is an example of the "second flow passage" in the present embodiment. As described later, the nitrogen flow passage 72, which serves as the second flow passage, includes a first connection pipe 72c and a second connection pipe 72d that constitute an outer pipe of the double pipe 8.

The nitrogen flow passage 72 is configured to pass through components of the engine 1. Specifically, the nitrogen flow passage 72 is configured to pass through each cylinder 11 of the engine 1. More specifically, the nitrogen flow passage 72 according to the present embodiment is configured to pass through each cylinder cover 10b of the engine 1.

In order to realize the above-described configuration, the nitrogen flow passage 72 is configured to include a flow path passing through the inside of the engine 1, such as a branch passage 72b described later, in addition to the first connection pipe 72c and the second connection pipe 72d that constitute the outer pipe of the double pipe 8.

As described above, the nitrogen flow passage 72 according to the present embodiment includes an outer pipe (for example, the first connection pipe 72c and the second connection pipe 72d) that surrounds an inner pipe so as to form the double pipe 8, and a flow path (for example, the branch passage 72b) that passes through components of the engine 1, such as the cylinder cover 10b.

To be specific, the nitrogen flow passage 72 according to the present embodiment includes a shared passage 72a shared by the plurality of cylinders 11, a plurality of branch passages 72b each branched from the shared passage 72a and provided for each cylinder 11, a plurality of first connection pipes 72c connecting the cylinders 11, and a second connection pipe 72d connecting one cylinder 11 to the discharge outlet 6. The one cylinder 11 mentioned here refers to the cylinder 11 located on the most downstream side in the flow direction of the nitrogen gas among the plurality of cylinders 11.

The shared passage 72a is constituted by piping disposed outside the cylinders 11. The shared passage 72a has an upstream end connected to the generator 51 via the first nitrogen gas system 7A.

Each of the plurality of branch passages 72b is constituted by at least one of piping disposed outside the cylinder 11 or a flow path formed inside the cylinder 11. Each branch passage 72b has an upstream end connected to the shared passage 72a and a downstream end connected to the corresponding first connection pipe 72c.

Specifically, as shown in FIGS. 3 and 4, each branch passage 72b extends so as to pass through or connect to at least one (both in the present embodiment) of the fuel gas injection valve 15 or the GGV 18 of each cylinder 11. For example, the branch passage 72b according to the present embodiment is configured to pass through the fuel gas injection valve 15 of each cylinder 11 and to be connected to the GGV 18 of the same cylinder 11.

Each of the plurality of first connection pipes 72c includes piping disposed outside the cylinder 11, for example, in the internal space of the engine room 1003. Each of the first connection pipes 72c includes a tubular member that connects two cylinders 11 adjacent to each other in the flow direction of the nitrogen gas. FIG. 4 illustrates the first connection pipe 72c that connects the first cylinder 11A and the second cylinder 11B.

Each first connection pipe 72c connecting the two cylinders 11 has an upstream end connected to the branch passage 72b of the cylinder 11 located on the upstream side in the flow direction of the nitrogen gas, and a downstream end connected to the branch passage 72b of the cylinder 11 located on the downstream side in the flow direction of the nitrogen gas.

In the illustrated example, the upstream end of the first connection pipe 72c is connected to, for example, the downstream end of the branch passage 72b of the first cylinder 11A. The downstream end of the first connection pipe 72c is connected, for example, to the upstream end of the branch passage 72b of the second cylinder 11B.

The second connection pipe 72d is constituted by piping disposed outside the cylinder 11, for example, in the internal space of the engine room 1003. The second connection pipe 72d is a tubular member that connects the discharge outlet 6 and the cylinder 11, among the multiple cylinders 11, which is closer to the discharge outlet 6 than the other cylinders 11 in the flow direction of the nitrogen gas. In FIG. 4, the second connection pipe 72d is connected to the sixth cylinder 11F. The cylinder 11 to which the second connection pipe 72d is connected can be referred to as a cylinder 11 that is farther from the generator 51 than the other cylinders 11 when viewed along the flow path of the nitrogen gas.

As illustrated in the upper part of FIG. 5, the first connection pipe 72c included in the nitrogen flow passage 72 as the second flow passage forms the double pipe 8 together with the second hydrogen flow pipe 41b included in the hydrogen flow passage 41 as the first flow passage.

Similarly, as illustrated in the lower part of FIG. 5, the second connection pipe 72d included in the nitrogen flow passage 72 as the second flow passage forms the double pipe 8 together with the first hydrogen flow pipe 41a included in the hydrogen flow passage 41 as the first flow passage.

For example, in the present embodiment, the first connection pipe 72c is configured as an outer pipe surrounding the second hydrogen flow pipe 41b. The second hydrogen flow pipe 41b constitutes an inner pipe for the first connection pipe 72c. When the second hydrogen flow pipe 41b is normal, hydrogen gas flows through a flow path Sf1 formed inside the second hydrogen flow pipe 41b, while nitrogen gas flows through a flow path Sf2 formed between the second hydrogen flow pipe 41b and the first connection pipe 72c.

On the other hand, when a trouble such as breakage occurs in the second hydrogen flow pipe 41b, leakage gas (hydrogen gas) leaking from the second hydrogen flow pipe 41b is pushed into or sucked into the first connection pipe 72c.

Similarly, the second connection pipe 72d is configured as an outer pipe surrounding the first hydrogen flow pipe 41a. The first hydrogen flow pipe 41a constitutes an inner pipe for the second connection pipe 72d. When the first hydrogen flow pipe 41a is normal, hydrogen gas flows through the flow path Sf1 formed inside the first hydrogen flow pipe 41a, while nitrogen gas flows through the flow path Sf2 formed between the first hydrogen flow pipe 41a and the second connection pipe 72d.

On the other hand, when a trouble such as breakage occurs in the first hydrogen flow pipe 41a, leakage gas (hydrogen gas) leaking from the first hydrogen flow pipe 41a is pushed into or sucked into the second connection pipe 72d.

### - Flow Rate Adjusting Unit 73 -

The flow rate adjusting unit 73 is disposed closer to the engine 1 than to the generator 51 in the nitrogen flow passage 72 serving as the second flow passage. The flow rate adjusting unit 73 is configured to adjust the flow rate of nitrogen gas in the nitrogen flow passage 72. The term "close" as used herein includes being relatively close on the flow passage viewed along the generator-side flow passage 71 and the nitrogen flow passage 72.

The flow rate adjusting unit 73 according to the present embodiment is configured to adjust the flow rate of nitrogen gas to the flow rate greater than or equal to a predetermined value. The flow rate may be adjusted by pressure regulation using a pressure reducing valve or the like, or by flow velocity regulation using a throttle or the like.

For example, the flow rate adjusting unit 73 includes a pressure adjusting unit 731 disposed at a selectable portion P1 of the nitrogen flow passage 72. The pressure adjusting unit 731 generates a pressure difference in the nitrogen gas between the primary side and the secondary side of the selectable portion P1. This pressure difference promotes the flow of nitrogen gas. The term "primary side" herein refers to the "upstream side" with respect to the selectable portion P1. Similarly, the term "secondary side" herein refers to the "downstream side" with respect to the same selectable portion P1.

As illustrated in FIG. 4, the selectable portion P1 may be set at a position upstream of the branch portion P2 between the shared passage 72a and the branch passage 72b in the nitrogen flow passage 72 and, as described above, relatively closer to the engine 1 than to the generator 51 along the flow path. The position relatively closer to the engine 1 than to the generator 51 on the flow path may be a position where the flow path length between the selectable portion P1 and the engine 1 is shorter than the flow path length between the same selectable portion P1 and the generator 51. The flow path length between the selectable portion P1 and the engine 1 may be, for example, the flow path length between the selectable portion P1 and the branch portion P2, or the flow path length between the selectable portion P1 and the first cylinder 11A located most upstream in the flow direction of the nitrogen gas.

For example, a pressure reducing valve can be used as the pressure adjusting unit 731. In this case, the pressure adjusting unit 731 is more preferably disposed at an inflow portion (a portion that can be regarded as an inlet of nitrogen gas) of the nitrogen flow passage 72 into the engine 1, for example, at the selectable portion P1 described above. The selectable portion P1 is an example of an "inflow portion" in the present embodiment.

The pressure adjusting unit 731, including cases where a pressure reducing valve is used, is electrically connected to the controller 100. The pressure adjusting unit 731 is operated by receiving an electric signal from the controller 100, thereby adjusting the pressure of the nitrogen gas.

The use of a pressure reducing valve as the pressure adjusting unit 731 is particularly suitable for the case where the nitrogen gas is set to a positive pressure. Alternatively, the nitrogen gas may be at a negative pressure as described above. In that case, instead of using a pressure reducing valve as the pressure adjusting unit 731, a flow generator that operates to suck nitrogen gas out of the nitrogen flow passage 72 may be used as the pressure adjusting unit 731. The flow generator is more preferably disposed at an outflow portion (a portion that can be regarded as an outlet of the nitrogen gas) of nitrogen gas from the engine 1, for example, at a selectable portion of the second connection pipe 72d. Even in such an arrangement, the flow rate adjusting unit 73 is disposed closer to the engine 1 than to the generator 51.

As described above, it is not essential to use a pressure reducing valve as the pressure adjusting unit 731. It is also not essential to dispose the pressure adjusting unit 731 at the inflow portion into the engine 1. In the first place, it is also not essential to configure the flow rate adjusting unit 73 solely by the pressure adjusting unit 731.

For example, as shown in FIG. 4, the flow rate adjusting unit 73 includes a throttle 732 which is disposed on the downstream side of the engine 1 in the nitrogen flow passage 72 serving as the second flow passage and narrows the flow passage cross-sectional area of the nitrogen flow passage 72. The throttle 732 narrows the flow passage cross-sectional area, thereby increasing the flow velocity of nitrogen gas passing through the throttle 732. The throttle 732 is not an essential element.

Specifically, the throttle 732 in the illustrated example is disposed in the second connection pipe 72d located on the downstream side of the engine 1. More specifically, the throttle 732 according to the present embodiment is disposed at the downstream end of the nitrogen flow passage 72, that is, near the connection portion between the second connection pipe 72d and the discharge outlet 6.

The flow rate of nitrogen gas regulated by the flow rate adjusting unit 73 includes a state of "flow rate = zero." That is, the flow rate adjusting unit 73 may be configured to confine leakage gas within the nitrogen flow passage 72 as the second flow passage by closing the discharge outlet 6.

For example, as shown in FIG. 4, the flow rate adjusting unit 73 includes a closing part 733 disposed at the discharge outlet 6, which closes the discharge outlet 6. The closing part 733 is configured by, for example, an electromagnetic valve electrically connected to the controller 100. The closing part 733 closes the discharge outlet 6 by operating in response to an electric signal from the controller 100. A movable throttle 732 may be used so that the throttle 732 can also serve as the closing part 733. The closing part 733 is not an essential element.

In the illustrated example, the nitrogen gas supplied from the inert gas source 5 flows into the engine 1 through the nitrogen flow passage 72. The flow rate of the nitrogen gas flowing into the engine 1 is maintained at a predetermined value or more by the pressure adjusting unit 731 as the flow rate adjusting unit 73. The nitrogen gas that has flowed into the engine 1 flows into the cylinder 11 from the shared passage 72a through the branch passage 72b.

The nitrogen gas that has flowed into the nitrogen flow passage 72 flows inside and outside the engine 1 as indicated by the arrows shown in broken lines in FIG. 4. On the other hand, as described above, the fuel gas injection valve 15 and the GGV 18 each have a double seal structure with two seal rings.

In this case, even if the first seal ring 151 near the combustion chamber 12 of the first and second seal rings 151 and 152 is damaged, or the third seal ring 181 near the gas accumulator 17 of the third and fourth seal rings 181 and 182 is damaged, the second or fourth seal ring 152, 182 can avoid leakage of hydrogen gas outside the engine 1.

However, since the first or third seal ring 151, 181 is damaged, a mechanism is required that allows hydrogen gas that has entered the gap between the fuel gas injection valve 15 or GGV 18 and cylinder cover 10b to be discharged as quickly as possible.

As indicated in FIG. 3, the leakage gas flows into the branch passage 72b. The leakage gas that has flowed into the branch passage 72b sequentially flows through the first connection pipe 72c and the second connection pipe 72d via the branch passage 72b, and is discharged from the discharge outlet 6.

Further, in the hydrogen flow passage 41, leakage gas generated in the first and second hydrogen flow pipes 41a and 41b, which constitute the inner pipes of the double pipe 8, also flows through the first connection pipe 72c and the second connection pipe 72d, which serve as the outer pipes, and is likewise discharged from the discharge outlet 6.

### <Controller 100>

FIG. 6 is a block diagram illustrating a configuration of the controller 100. The controller 100 has a processor, volatile memory, non-volatile memory, and input/output devices. Various sensors and a telegraph 101 are connected to the controller 100. In addition, as described above, the hydrogen pump 43, the booster 52, the flow passage control valve 53, the flow rate adjusting unit 73, and the like are electrically connected to the controller 100.

The fuel gas injection valves 15, the fuel oil injection valves 19, and the GGV 18 of each cylinder 11 are also connected to the controller 100. Although only one fuel gas injection valve 15, one fuel oil injection valve 19, and one GGV 18 are shown in FIG. 6, one or more fuel gas injection valves 15, one or more fuel oil injection valves 19, and one GGV 18 are provided for each cylinder 11 in the present embodiment.

The controller 100 generates a control signal, based on a signal input from the sensors, when the telegraph 101 is operated, for example. The controller 100 inputs the generated control signal to the plurality of electromagnetic valves and controls the GVT 3, the fuel gas injection valves 15, the GGV 18, and the like through the electromagnetic valves.

For example, the controller 100 is connected to the fuel gas injection valve 15 through a first injection control valve 153. The first injection control valve 153 is an electromagnetic valve that controls the supply of hydraulic oil to the fuel gas injection valve 15.

The controller 100 is also connected to the fuel oil injection valve 19 through a second injection control valve 193. The second injection control valve 193 is an electromagnetic valve that controls the supply of hydraulic oil to the fuel oil injection valve 19.

The controller 100 is also connected to the GGV 18 through a gate control valve 183. The gate control valve 183 is an electromagnetic valve that controls the supply of hydraulic oil to the GGV 18.

For example, the controller 100 controls GVT 3 and opens GGV 18, so that hydrogen gas is supplied from GVT 3 to each fuel gas injection valve 15. This supply can be controlled separately for each cylinder 11.

The controller 100 then opens the fuel gas injection valves 15, so that hydrogen gas is injected into the combustion chamber 12 from the injection port of each fuel gas injection valve 15. This injection can also be controlled separately for each cylinder 11.

In this way, the controller 100 injects hydrogen gas into each cylinder 11, making it possible to combust the hydrogen gas in the corresponding combustion chamber 12. The combustion of the hydrogen gas in the combustion chamber 12 causes the engine 1 to operate. The controller 100 can control the amount of hydrogen supplied into the combustion chambers 12 through the GVT 3 and the GGV 18.

The sensors connected to the controller 100 include a gas characteristic sensor 91. The gas characteristic sensor 91 is disposed at the downstream end of the nitrogen flow passage 72 as the second flow passage, and detects at least one of the oxygen concentration or the nitrogen concentration at the downstream end. For example, the gas characteristic sensor 91 according to the present embodiment is disposed on the downstream side of the throttle 732.

The gas characteristic sensor 91 according to the present embodiment is constituted by both an oxygen concentration sensor that detects the oxygen concentration at the downstream end of the nitrogen flow passage 72 and a nitrogen concentration sensor that detects the nitrogen concentration at the downstream end of the nitrogen flow passage 72. Only an oxygen concentration sensor or only a nitrogen concentration sensor may be used as the gas characteristic sensor 91.

The sensors connected to the controller 100 include a leakage sensor 92. The leakage sensor 92 detects gas leakage from the hydrogen flow passage 41 as the first flow passage. The leakage sensor 92 is disposed in the nitrogen flow passage 72, for example, and detects at least one of hydrogen concentration, oxygen concentration, nitrogen concentration, or pressure in the pipe at the downstream end of the nitrogen flow passage 72.

The controller 100 according to the present embodiment is configured to determine whether to operate the engine 1 using hydrogen gas, based on the detection signal of the gas characteristic sensor 91.

As is well known, in a hydrogen-oxygen-nitrogen ternary system, there exists a lower limit value of the oxygen gas concentration (oxygen concentration) and an upper limit value of the nitrogen gas concentration (nitrogen concentration), each of which ensures the explosiveness of the hydrogen gas. Hereinafter, the lower limit value of the former is defined as a threshold oxygen concentration, and the upper limit value of the latter is defined as a threshold nitrogen concentration.

The controller 100 according to the present embodiment permits operation of the engine 1 using hydrogen gas when either a first condition, which is met when the detected value of the oxygen concentration is less than or equal to the threshold oxygen concentration, or a second condition, which is met when the detected value of the nitrogen concentration is greater than or equal to the threshold nitrogen concentration, is met. The hydrogen concentration does not have to be detected as long as the oxygen concentration or the nitrogen concentration is detected.

The specific values of the threshold oxygen concentration and the threshold nitrogen concentration are predetermined in the above-described hydrogen-oxygen-nitrogen ternary system, as exemplified in documents such as Atsushi SHIGEMORI, "Regarding the Physical Properties and Safe Handling of Hydrogen Gas," Cryogenic Engineering Vol. 55, No. 1, 2020. The controller 100 pre-stores the specified values. The controller 100 is configured to read the stored specified values when determining the first or second condition.

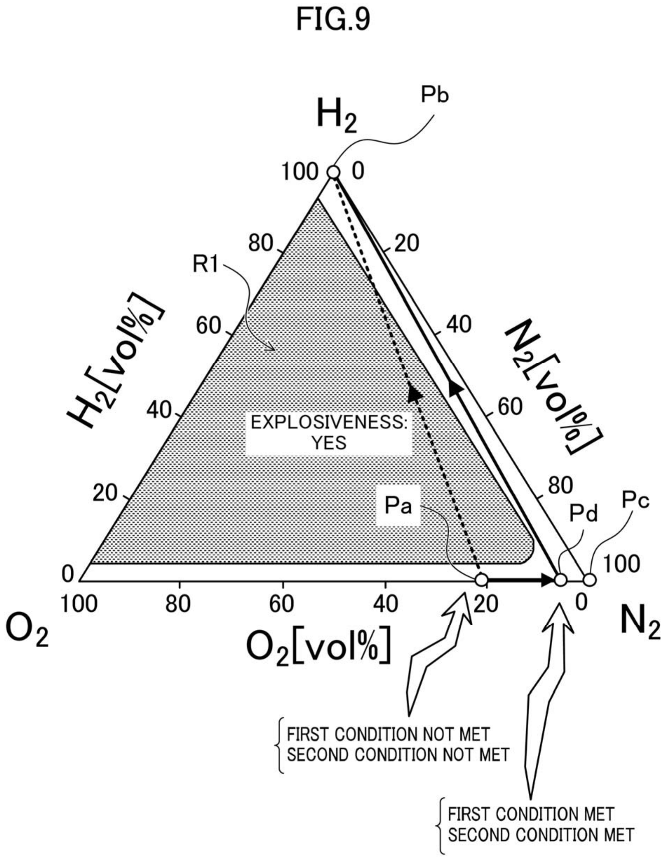

Specifically, as shown in the above-mentioned document and in FIG. 9, an explosion range R1, which represents the composition of a gas in which hydrogen gas can explode, has been defined by those skilled in the art. In general, when the composition of the gas falls within the explosion range R1, hydrogen gas may cause an explosion with oxygen gas as a combustion-supporting gas. As shown in FIG. 9, a first composition Pa indicating the composition of general air is positioned outside the explosion range R1 as is well known.

As an example, a case where hydrogen gas is mixed into the air will be discussed. In this case, as the hydrogen concentration in the air increases, the composition of the mixed gas of the hydrogen-oxygen-nitrogen ternary system changes from the first composition Pa toward a second composition Pb, which indicates a state where the ratio of hydrogen gas is 100%, according to the arrow shown by the broken line in FIG. 9. In this case, the arrow shown by the broken line crosses the explosion range R1. An explosion of hydrogen gas is a concern as the hydrogen concentration increases. The first composition Pa corresponds to an oxygen concentration around 21% and a nitrogen concentration slightly over 78%. In this state, both the first condition and the second condition described later are not met. In the case of general air, the combined ratio of oxygen and nitrogen in the air reaches 99% or more.

On the other hand, a case where nitrogen gas is supplied into the air will be discussed. In this case, as the nitrogen concentration in the air increases, the composition of the mixed gas of the hydrogen-oxygen-nitrogen ternary system changes from the first composition Pa toward a third composition Pc, which indicates a state where the ratio of nitrogen gas is 100%, according to the arrow shown by the solid line in FIG. 9. At that change, the oxygen concentration decreases from the oxygen concentration in the air toward 0%. The nitrogen concentration increases from the nitrogen concentration in air toward 100%.

Here, the composition of the mixed gas in a state where the oxygen concentration is less than the threshold oxygen concentration and the nitrogen concentration exceeds the threshold nitrogen concentration is defined as a fourth composition Pd. When the composition of the mixed gas reaches the fourth composition Pd, the explosiveness of hydrogen gas is lost even without further supply of nitrogen gas. For the fourth composition Pd, both the first and second conditions described below are met.

For example, a case where, after the composition of the mixed gas reaches the fourth composition Pd, hydrogen gas is mixed into the mixed gas will be discussed. In this case, as the hydrogen concentration in the mixed gas increases, the composition of the mixed gas of the hydrogen-oxygen-nitrogen ternary system changes from the fourth composition Pd toward the second composition Pb, according to the arrow shown by the solid line in FIG. 9. In this case, the arrow shown by the solid line no longer crosses the explosion range R1, unlike the arrow shown by the broken line in the same drawing. Once the composition reaches the fourth composition Pd, explosion of hydrogen gas is not a concern even if the hydrogen concentration increases from that state.

As described above, the explosiveness of hydrogen gas is lost when the oxygen concentration is less than the threshold oxygen concentration or when the nitrogen concentration exceeds the threshold nitrogen concentration, for example. In this case, even if hydrogen is mixed into the nitrogen flow passage 72, explosion of the hydrogen is avoided. According to the above document, the threshold oxygen concentration may be determined preferably within a range of 0% or more and 5.0% or less, and more preferably within a range of 0% or more and 5.3% or less. Similarly, the threshold nitrogen concentration may be determined preferably within a range of 95% or more and 100% or less, and more preferably within a range of 94.7% or more and 100% or less.

Further, the combined ratio of oxygen and nitrogen in the air is 99% or more in the first composition Pa and other compositions. The oxygen concentration that becomes less than the threshold oxygen concentration is substantially equivalent to the nitrogen concentration that exceeds the threshold nitrogen concentration. Therefore, in the present disclosure, it is not essential to determine both the first and second conditions.

The controller 100 makes such a determination at least at one of the following timings (in the present embodiment, both): before the operation of the engine 1 using hydrogen gas is started; and during the operation of the engine 1 using hydrogen gas.

Further, the controller 100 makes the determination of at least one of the first condition and the second condition while adjusting the flow rate of the nitrogen gas by the flow rate adjusting unit 73.

Hereinafter, a specific example of the process executed by the controller 100 will be described.

### <Specific Example of Process Executed by Controller 100>

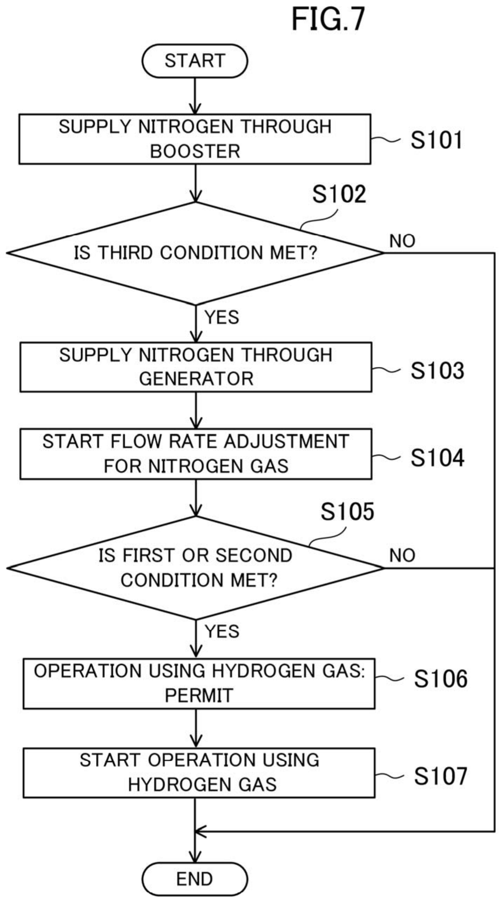

FIG. 7 is a flowchart illustrating a process executed before the start of operation of the engine 1 using hydrogen gas. The process illustrated in FIG. 7 is executed by the controller 100 before the operation of the engine 1 using hydrogen gas is started.

For example, in the present embodiment, the controller 100 executes the process illustrated in FIG. 7 when the engine 1 is started in the first or second mode or when the mode is switched from the third mode to the first or second mode.

First, in step S101, the controller 100 actuates the booster 52. The controller 100 supplies nitrogen gas into the hydrogen flow passage 41 through the booster 52.

In the following step S102, the controller 100 reads the detection signal of the leakage sensor 92 and determines whether the third condition is met based on the detection signal. The third condition is specified to be met when it is determined that no gas leakage occurs from the hydrogen flow passage 41, in particular from the first or second hydrogen flow pipes 41a, 41b. For example, if a pressure sensor which detects the pressure inside the pipe is used as the leakage sensor 92, the presence or absence of leakage can be determined by monitoring the transition of the detected pressure. In this case, the determination may be made based on the magnitude relationship between the detected pressure and a predetermined threshold value, or based on the temporal change in the detected pressure.

If the determination result in step S102 is NO, i.e., the third condition is not met, the controller 100 terminates the process of FIG. 7. In this case, the controller 100 does not permit the operation of the engine 1 using hydrogen gas. The controller 100 operates the engine 1 in a third mode in which the fuel oil is combusted.

If the determination result in step S102 is YES, i.e., the third condition is met, the controller 100 advances the control process to step S103. In step S103, the controller 100 supplies nitrogen gas into the nitrogen flow passage 72 through the generator 51.

In step S104, the controller 100 starts adjusting the flow rate of nitrogen gas through the flow rate adjusting unit 73. In the following step S105, the controller 100 reads the detection signal of the gas characteristic sensor 91 and determines whether the first condition or the second condition is met based on the detection signal.

The first condition is specified to be met when the detected value of the oxygen concentration is less than or equal to the threshold oxygen concentration. The second condition is specified to be met when the detected value of nitrogen concentration is greater than or equal to the threshold nitrogen concentration. Both the threshold oxygen concentration and the threshold nitrogen concentration are pre-stored in the controller 100.

It is not essential to determine both the first condition and the second condition. If only an oxygen concentration sensor is used as the gas characteristic sensor 91, only the first condition may be determined; if only a nitrogen concentration sensor is used, only the second condition may be determined.

As shown in FIG. 7, the process from step S104 to step S105 is executed at a timing after the start of the supply of nitrogen gas through the generator 51.

If the determination result in step S105 is YES, i.e., the first condition or the second condition is met, the controller 100 advances the control process to step S106. In this case, the controller 100 permits operation of the engine 1 using hydrogen gas (step S106) and starts operation of the engine 1 in the first or second mode in which hydrogen gas is combusted.

In addition, if the determination result in step S105 is YES, the controller 100 reduces the flow rate of nitrogen gas through the flow rate adjusting unit 73. It is thus possible to reduce the supply amount of nitrogen gas. That is, the timing for adjusting the flow rate of nitrogen gas by the flow rate adjusting unit 73 may be before or after the determination of the first or second condition.

In other words, the controller 100 can adjust the flow rate of the nitrogen gas by the flow rate adjusting unit 73 so as to increase the flow velocity of the nitrogen gas, before and after the determination of at least one of the first and second conditions.

If the determination result in step S105 is NO, the controller 100 terminates the process of FIG. 7 similarly to the case in which the determination result in step S102 is NO. In this case, the controller 100 does not permit the operation of the engine 1 using hydrogen gas. The controller 100 operates the engine 1 in a third mode in which the fuel oil is combusted.

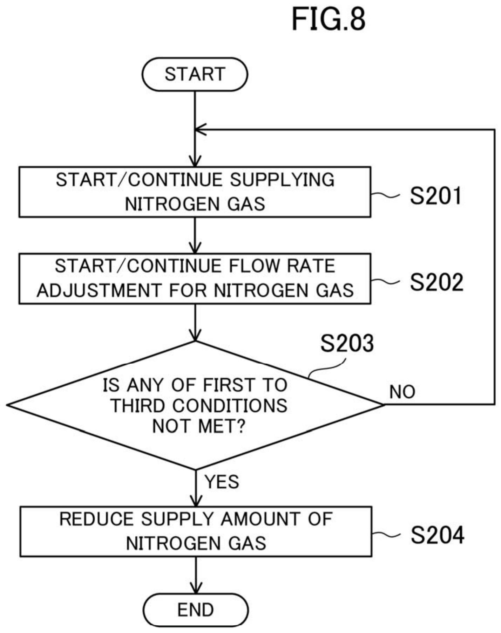

Next, FIG. 8 is a flowchart illustrating a process executed during the operation of the engine 1 using hydrogen gas. The process illustrated in FIG. 8 is executed by the controller 100 during operation of the engine 1 using hydrogen gas.

For example, in the present embodiment, the controller 100 executes the process illustrated in FIG. 8 during the operation of the engine 1 in the first or second mode.

Specifically, in step S201, the controller 100 starts or continues the supply of nitrogen gas into the nitrogen flow passage 72 through the generator 51. At the time of the first execution of the process illustrated in FIG. 8, the supply of nitrogen gas is started, and at the second and subsequent executions, the supply of nitrogen gas is continued.

In the following step S202, the controller 100 starts or continues adjusting the flow rate of nitrogen gas through the flow rate adjusting unit 73. At the time of the first execution of the process illustrated in FIG. 8, the flow rate adjustment is started, and at the second and subsequent executions, the flow rate adjustment is continued.

In the following step S203, the controller 100 reads the detection signals of the gas characteristic sensor 91 and the leakage sensor 92, and determines whether any of the first condition, the second condition, and the third condition is not met based on the detection signals.

Here, the determination of each condition in step S203 is the same as that in step S102 and step S105 of FIG. 7. That is, it is not essential to determine both the first condition and the second condition. Furthermore, it is not essential to determine the third condition. The controller 100 may determine at least one of the first condition, the second condition, and the third condition.

If the determination result in step S203 is NO, the controller 100 returns the control process to step S201 and executes steps S201 to S203 again. That is, during the operation of the engine 1 using hydrogen gas, the controller 100 continuously makes the flow rate adjustment of nitrogen gas through the flow rate adjusting unit 73, the determination whether the first condition or the second condition is met, and the determination whether the third condition is met based on the detection signal of the leakage sensor 92.

If the determination result in step S203 is YES, the controller 100 advances the control process to step S204. In this case, the controller 100 does not permit the operation of the engine 1 using hydrogen gas.

Therefore, when the process proceeds to the step S204 (when any of the first condition, the second condition, and the third condition is not met), the amount of hydrogen gas supplied into the combustion chambers 12 is reduced.

If the operation is executed in the first mode, the injection amount of hydrogen gas may be reduced while continuing the operation in the first mode, or the ratio of the calorific value of the heavy oil to the calorific value of hydrogen gas (mixed combustion ratio) in the combustion chamber 12 may be increased from zero to a non-zero value by switching from the first mode to the second or third mode.

If the operation is executed in the second mode, the mixed combustion ratio may be increased by decreasing the injection amount of hydrogen gas while continuing the operation in the second mode, or the mixed combustion ratio may be increased from a value less than 100% to 100% by switching from the second mode to the third mode.

### <Significance of Flow Rate Adjusting Unit 73>

In general, a tank for storing an inert gas such as nitrogen is unsuitable for mounting on a ship, considering the space on the ship or inside the ship.

To address this, according to the above embodiment, a generator 51 for nitrogen gas is mounted on the ship 1000 instead of a tank storing nitrogen gas. A system configured to generate nitrogen gas appropriately contributes to the compactness of the nitrogen gas supply system, such as the inert gas source 5 and the inert gas system 7.

Even if the generator 51, such as that described in the first aspect, is used, the generator 51 itself may become large in size depending on the amount of nitrogen gas to be generated. In order to realize the compactness of the inert gas source 5, it is desirable to set the flow rate of the nitrogen gas to a desired value without increasing the size of the generator 51.

To address this, by using the flow rate adjusting unit 73 illustrated in FIG. 4, the flow rate of nitrogen gas can be appropriately set to achieve smooth discharge of the leaked hydrogen gas and reliable confinement of the leaked hydrogen gas, without changing the dimensions of the generator 51 itself.

As illustrated in FIG. 4, the flow rate adjusting unit 73 includes at least one of the throttle 732 or the pressure adjusting unit 731; by this configuration, it is possible to keep the flow rate of nitrogen gas in the vicinity of the engine 1 at or above a certain level while reducing the supply of nitrogen gas from the generator 51 to the nitrogen flow passage 72. This configuration contributes to both the compactness of the inert gas source 5 and an appropriate measure to the leakage of hydrogen gas.

As explained with reference to FIG. 4, the flow rate adjusting unit 73 is configured as the pressure adjusting unit 731 such as a pressure reducing valve; this configuration is advantageous in ensuring the flow rate of nitrogen gas in the vicinity of the engine 1.

As illustrated in FIG. 4, the flow rate adjusting unit 73 is disposed closer to the engine 1 than to the generator 51 when viewed along the flow path formed by the nitrogen flow passage 72. Such a configuration can more reliably adjust the flow rate of the nitrogen gas in the vicinity of the engine 1 to a desired value, as compared, for example, to a configuration in which the flow rate adjusting unit 73 is disposed in the vicinity of the generator 51. This enables a more appropriate measure to hydrogen gas leakage.

Further, the pressure adjusting unit 731 is disposed at the selectable portion P1 in FIG. 4; this configuration is advantageous in ensuring the flow rate of nitrogen gas in the vicinity of the engine 1, as compared, for example, to a configuration in which the pressure adjusting unit 731 is disposed in the vicinity of the generator 51.

As illustrated in FIG. 4, the flow rate adjusting unit 73 is configured as the throttle 732; this configuration can increase the flow velocity of the nitrogen gas discharged from the nitrogen flow passage 72. This is advantageous in adjusting the flow rate of nitrogen gas and enables a more appropriate measure to hydrogen gas leakage.

As described with reference to the closing part 733 in FIG. 4, the flow rate of nitrogen gas is set to zero instead of keeping it at or above a predetermined value. This makes it possible to confine the hydrogen gas leaked from the hydrogen flow passage 41 serving as the inner pipe, and enables a more appropriate measure to hydrogen gas leakage.

For example, if the generator 51 malfunctions, the discharge outlet 6 is closed by the closing part 733 so that the nitrogen gas and the hydrogen gas leaked into the nitrogen gas are not discharged. Accordingly, even when the supply of the nitrogen gas from the generator 51 is stopped, it is possible to respond to the hydrogen gas leakage and continue the operation of the engine 1 using hydrogen gas as well.

Further, as illustrated in FIG. 7 and FIG. 8, the controller 100 determines whether to permit the operation of the engine 1 based on the threshold oxygen concentration or the threshold nitrogen concentration defined based on the explosiveness in the hydrogen-oxygen-nitrogen ternary system.

In this way, by using the threshold oxygen concentration or the threshold nitrogen concentration, it can be determined that an explosion due to the leaked hydrogen gas cannot occur even if the nitrogen concentration in the nitrogen flow passage 72 does not reach 100% and a small amount of oxygen is present therein. The amount of nitrogen gas generated in the generator 51 can be set appropriately without excess or deficiency, making it possible to achieve compactness of the generator 51 and, consequently, the inert gas source 5.

Further, determination can be made based on the threshold oxygen concentration and the threshold nitrogen concentration, while reducing the amount of nitrogen gas supplied from the generator 51 to the nitrogen flow passage 72 by increasing the flow velocity of nitrogen gas by the flow rate adjusting unit 73, especially the throttle 732, as illustrated from step S103 to step S105 in FIG. 7 and from step S201 to step S203 in FIG. 8. This can reduce the supply amount (pressure) of the nitrogen gas to the nitrogen flow passage 72 and reduce leakage of the nitrogen gas in the event of breakage of the outer pipe.

Specifically, the throttle 732 can increase the flow velocity of the nitrogen gas at the time of discharge to the outside of the ship. This can enhance the diffusivity around the discharge outlet 6 in the event of leakage of hydrogen gas as well. Since the diffusivity is increased by the throttle 732, the nitrogen flow rate can be reduced accordingly.

In addition, since the diffusivity after discharge from the ship is enhanced, the hydrogen concentration is more likely to become diluted. Accordingly, even if the leaked hydrogen is mixed with the atmosphere or air (oxygen concentration: 21%), the risk associated with the ignition or combustion of hydrogen can be reduced.

As shown in step S101 of FIG. 7, the nitrogen gas at a relatively high pressure (gas derived from the booster 52) can rapidly increase the nitrogen concentration in the hydrogen flow passage 41. By rapidly increasing the nitrogen concentration in the hydrogen flow passage 41, the determination based on the leakage sensor 92 can be made promptly. Since the determination based on the leakage sensor 92 can be made promptly, the subsequent processing can be started promptly. This makes it possible to promptly shift from the supply of nitrogen gas to the hydrogen flow passage 41 using the booster 52 to the supply of nitrogen gas to the nitrogen flow passage 72 using the generator 51. This is advantageous in promptly starting the determination whether to operate the hydrogen engine, based on the first condition or the second condition. Using the booster 52 and the generator 51 according to their intended purposes is advantageous in determining as promptly as possible whether to operate the engine 1 using hydrogen gas.

Further, as illustrated from step S201 to step S203 in FIG. 8, during the operation of the engine 1 using hydrogen gas, the controller 100 continuously makes the determination as to the explosiveness of the hydrogen gas based on the threshold oxygen concentration or the threshold nitrogen concentration (a determination to confirm that nitrogen gas is sufficiently supplied into the nitrogen flow passage 72) and the monitoring of hydrogen gas leakage.

With this configuration, the amount of nitrogen gas supplied to the nitrogen flow passage 72 is reduced. It is thus possible to achieve both compactness of the inert gas source and higher accuracy in detecting the oxygen concentration or the hydrogen concentration in the nitrogen flow passage 72, and consequently higher accuracy in determining whether to operate the engine 1.

As explained as a specific example of step S204 in FIG. 8, even when any one of the first condition, the second condition, or the third condition is not met, the operation of the engine 1 can be continued using heavy oil.

It has been known to shut off the supply of hydrogen gas to the engine 1 in the event of hydrogen gas leakage. When the supply of hydrogen gas is shut off, the engine 1 stops its operation.

In fact, as for the engine 1 used in a vehicle, it is enough to park the vehicle on the shoulder of a road or the like in stopping the engine. However, as for the engine 1 used in a ship, if it is completely stopped, the ship may fall into a so-called "dead ship condition." The dead ship condition is undesirable because it may cause various troubles such as a drift of the ship.

In contrast, by continuing the operation of the engine 1 using the heavy oil as in the above embodiment, it is possible to cope with the leakage of hydrogen gas appropriately and keep the ship from falling into a dead ship condition even in the event of hydrogen gas leakage.

### <Other Embodiments>

In the above embodiment, a configuration in which a nitrogen gas generator 51 is mounted on the ship 1000 instead of a tank storing nitrogen gas as inert gas is described as an example. However, the present disclosure is not limited to such a configuration. The engine system S may include a tank for storing an inert gas such as nitrogen gas in addition to the generator 51. The combination of the generator 51 and tank contributes to the compactness of the tank compared to conventional configurations.

Further, as suggested in FIG. 4, in the above embodiment, the flow directions of hydrogen gas and nitrogen gas are opposite to each other. However, the present disclosure is not limited to such a configuration. Hydrogen gas and nitrogen gas may flow in the same direction.

In the above embodiment, the flowcharts are shown in FIG. 7 and FIG. 8 as examples of the processes executed by the controller 100, but these processes are not essential for the present disclosure. The controller 100 may execute either of the processes shown as examples in FIG. 7 and FIG. 8, or may omit both.

### DESCRIPTION OF REFERENCE CHARACTERS

- S: Engine System
- 1: Engine (Hydrogen Engine)
- 11: Cylinder
- 12: Combustion Chamber
- 15: Gas Fuel Injection Valve
- 19: Fuel Oil Injection Valve
- 2: Hydrogen Tank
- 3: GVT
- 4: Hydrogen Gas System
- 41: Hydrogen Flow Passage (First Flow Passage)
- 41a: First Hydrogen Flow Pipe (Inner Pipe)
- 41b: Second Hydrogen Flow Pipe (Inner Pipe)
- 5: Inert Gas Source
- 51: Generator
- 52: Booster
- 6: Discharge Outlet
- 7: Inert Gas System
- 72: Nitrogen Flow Passage (Second Flow Passage)
- 72c: First Connection Pipe (Outer Pipe)
- 72d: Second Connection Pipe (Outer Pipe)
- 73: Flow Rate Adjusting Unit
- 731: Pressure Adjusting Unit
- 732: Throttle
- 733: Closing Part
- 8: Double Pipe
- 91: Gas Characteristic Sensor
- 92: Leakage Sensor
- 100: Controller
- 1000: Ship
- P1: Selectable Portion (Inlet)

## Claims

1. An engine system comprising:
a hydrogen engine mounted on a ship and configured to combust hydrogen gas in a combustion chamber;
a first flow passage connected to the hydrogen engine and configured to allow the hydrogen gas to flow therethrough so that the hydrogen gas is supplied to the hydrogen engine;
a generator mounted on the ship and configured to generate an inert gas;
a second flow passage including an outer pipe that surrounds at least part of the first flow passage serving as an inner pipe to form a double pipe, the second flow passage being configured to discharge the inert gas, supplied from the generator, to the outside of the ship through the hydrogen engine; and
a flow rate adjusting unit configured to adjust a flow rate of the inert gas in the second flow passage.

2. The engine system of claim 1, wherein
the flow rate adjusting unit adjusts the flow rate of the inert gas to the flow rate greater than or equal to a predetermined value.

3. The engine system of claim 2, wherein
the flow rate adjusting unit includes a pressure adjusting unit disposed at a selectable portion of the second flow passage, the pressure adjusting unit being configured to generate a pressure difference in the inert gas between a primary side and a secondary side of the selectable portion.

4. The engine system of claim 3, wherein
the flow rate adjusting unit is disposed closer to the hydrogen engine than to the generator on a flow path formed by the second flow passage.

5. The engine system of claim 4, wherein
the flow rate adjusting unit is disposed at least at one of an inflow portion into the hydrogen engine or an outflow portion from the hydrogen engine in the second flow passage.

6. The engine system of any one of claims 2 to 5, wherein
the flow rate adjusting unit includes a throttle disposed at a downstream end of the second flow passage, the throttle being configured to narrow a flow passage cross-sectional area at the downstream end.

7. The engine system of claim 1, wherein
the flow rate adjusting unit includes a closing part disposed at a discharge outlet located at a downstream end of the second flow passage, the closing part being configured to close the discharge outlet.

8. The engine system of claim 2, wherein
the inert gas is nitrogen gas,
the engine system further comprises:
a gas characteristic sensor disposed at a downstream end of the second flow passage and configured to detect at least one of an oxygen concentration or a nitrogen concentration at the downstream end; and
a controller configured to determine whether to operate the hydrogen engine using the hydrogen gas, based on a detection signal from the gas characteristic sensor,
a lower limit value of the oxygen concentration that is predetermined in a hydrogen-oxygen-nitrogen ternary system and at which explosiveness of the hydrogen gas is ensured is defined as a threshold oxygen concentration, and an upper limit value of the nitrogen concentration that is predetermined in the hydrogen-oxygen-nitrogen ternary system and at which explosiveness of the hydrogen gas is ensured is defined as a threshold nitrogen concentration,
the controller permits operation of the hydrogen engine using the hydrogen gas if either a first condition, which is met when a detected value of the oxygen concentration is less than or equal to the threshold oxygen concentration, or a second condition, which is met when a detected value of the nitrogen concentration is greater than or equal to the threshold nitrogen concentration, is met, and
the controller makes a determination of at least one of the first condition or the second condition while adjusting a flow rate of the nitrogen gas by the flow rate adjusting unit so as to increase a flow velocity of the nitrogen gas.

9. The engine system of claim 8, further comprising:
a booster configured to store the nitrogen gas at a pressure higher than that in the generator; and
a leakage sensor configured to detect gas leakage from the first flow passage, wherein
before starting operation of the hydrogen engine using the hydrogen gas, the controller
supplies the nitrogen gas into the first flow passage through the booster,
determines whether a third condition indicating that no gas leakage from the first flow passage occurs is met, based on a detection signal from the leakage sensor,
if the third condition is met, supplies the nitrogen gas into the second flow passage through the generator instead of the booster,
at a timing after the start of the supply of the nitrogen gas through the generator, adjusts the flow rate of the nitrogen gas through the flow rate adjusting unit and determines whether the first condition or the second condition is met, and
starts operation of the hydrogen engine if the first condition or the second condition is met.

10. The engine system of claim 8, further comprising:
a leakage sensor configured to detect gas leakage from the first flow passage, wherein
during operation of the hydrogen engine using the hydrogen gas, the controller
continuously makes an adjustment of the flow rate of the nitrogen gas through the flow rate adjusting unit, a determination whether the first condition or the second condition is met, and a determination, based on a detection signal from the leakage sensor, whether a third condition indicating that no gas leakage from the first flow passage occurs is met, and
decreases a supply amount of the hydrogen gas into the combustion chamber if any one of the first condition, the second condition, or the third condition is not met.

11. The engine system of claim 10, wherein
the hydrogen engine combusts a different type of fuel that is different from the hydrogen gas, together with the hydrogen gas in the combustion chamber, and
the controller increases a ratio of a calorific value of the different type of fuel to a calorific value of the hydrogen gas in the combustion chamber if any one of the first condition, the second condition, or the third condition is not met.
